# EUROPÄISCHE PATENTANMELDUNG

(11) **EP 0 768 553 A1**
(43) Veröffentlichungstag der Anmeldung: **16.04.1997**
(21) Anmeldenummer: 96116351.6
(22) Anmeldetag: 11.10.1996
(51) Int. Cl.: G02C 5/22

(54) **Federscharnier, insbesondere für Brillenbügel**

(30) Priorität: 11.10.1995 DE 19537884
(71) Anmelder: Owp Brillen GmbH, 94032 Passau (DE)
(72) Erfinder: Groscurth, Wilhelm, D-94032 Passau (DE)
(74) Vertreter: KUHNEN, WACKER & PARTNER

(57) **Zusammenfassung**

Die Erfindung beschreibt ein Federscharnier, insbesondere für einen Brillenbügel, das auf einfache Weise einen angenehmen Tragekomfort bei Brillen bereitstellt, in dem ein Zugstab, eine Feder, ein Gelenk und zwei Widerlager vorgesehen ist, wobei der Zugstab an dem Widerlager für die Feder angreift, und mit seinem Zugstabkopf mit einem gelenkfesten Widerlager derart zusammenwirkt, daß es ab einen vorbestimmten öffnungewinkel des Federscharniers das Widerlager unter Federspannung auf das Gelenk zubewegt. Vorzugsweise sind das bewegliche Widerlager und die Feder auf den Brillenbügel aufgefädelt.

## Beschreibung

Die Erfindung betrifft ein Federscharnier, insbesondere für einen Brillenbügel, gemäß dem Oberbegriff des Anspruchs 1.

Derartige Federscharniere können insbesondere bei Brillen bzw. Brillenfassungen dazu herangezogen werden, eine federnde Anlage am Kopf des Trägers zu ermöglichen. Mit einem derartigen Federscharnier wird der Tragekomfort der Brillenfassungen erhöht und das Brillenbügelgelenk gegen Überlastung abgesichert.

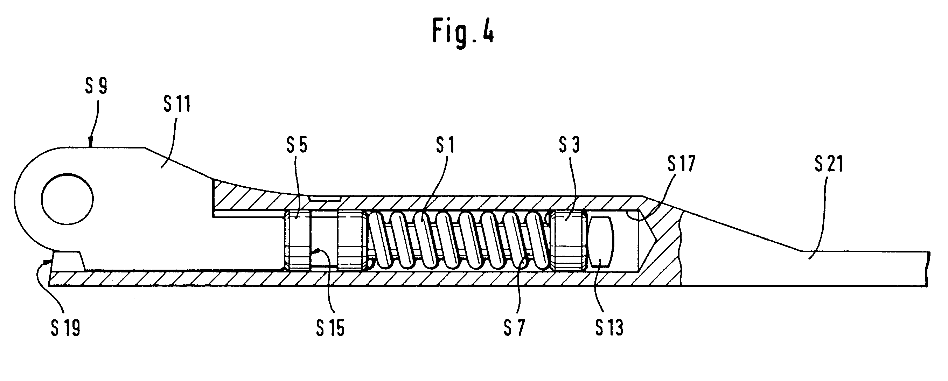

Ein für diese Zwecke geeignetes, bereits im Handel erhältliches Federscharnier ist beispielsweise in Figur 4 gezeigt, wobei das Federscharnier bereits im Bügel S21 montiert ist. Das Federscharnier weist eine Druckfeder S1, einen Stützring S3, der auf die Druckfeder S1 in Form eines Widerlagers einwirkt, und eine Verschlußhülse S5 auf, gegen die die Druckfeder gedrückt wird. Die Verschlußhülse S5 ist ferner mit einer in Umfangsrichtung verlaufenden Nut S15 versehen. Die Verschlußhülse S5, die Druckfeder S1 und der Stützring S3 werden auf eine Stange S7 eines das Brillenbügelgelenk S9 aufweisenden Bügelteils S11 gestülpt und mit einer Schraube S13 auf der Stange S7 gehalten. Das so vormontierte Bügelteil S11 kann dann beispielsweise in eine in Axialrichtung verlaufende Ausnehmung S17 eingeführt werden, wobei der Bügel S21 mit der Verschlußhülse S5 beispielsweise durch Eindrücken der Wandung der Ausnehmung S17 in die Nut S15 der Verschlußhülse S5 in Eingriff gebracht wird. Um die federnde Wirkung durch die Druckfeder aufzubauen, wird die außenseitige Endfläche S19 beispielsweise des Bügels S21 bzw. der Ausnehmung S17 als Anschlag genutzt. Wird der Bügel S21 beim Öffnen um das Gelenk S9 gedreht, so kommt der Anschlag S19 beispielsweise mit dem einem Stegfortsatz des Brillenfassungsrands in Anlagekontakt, so daß bei weiterer Drehung des Bügels S21 die mit dem Bügel S21 fest verbundene Verschlußhülse S5 die Druckfeder S1 zusammendrückt, wobei die Verschlußhülse S5 auf dem Stab S7 des Bügelteils S11 entlang gleitet. Wird der Bügel S21 dann freigegeben, wird er durch die Rückstellkraft der Druckfeder S1 solange zurückgeschwenkt, bis die innenseitigen Endflächen des Bügels S21 in Anlagekontakt mit dem Bügelteils S11 gelangt.

Ein derartig aufgebautes Federscharnier weist den Nachteil auf, daß mehrere Einzelkomponenten zusammenwirken müssen und ein mit einem derartigen Federscharnier ausgestatteter Bügel mit komplizierten Einzelschritten zusammengebaut werden muß. Ein Austausch der Feder ist äußerst aufwendig und teilweise nur mit Spezialwerkzeugen möglich. Ferner weist der das oben beschriebene Federscharnier aufweisende Bügel den Nachteil auf, daß ein derart zusammengebautes Federscharnier nicht nachträglich sandgestrahlt werden kann, ohne dabei die Gängigkeit des Federscharniers zu beeinträchtigen. Ferner muß, um eine lediglich über kleine Öffnungswinkel große Federspannung zu erreichen, das gesamte Federscharnier unter Vorspannung zusammengeschraubt werden, wozu teilweise spezielle Vorrichtungen benötigt werden.

Der Erfindung liegt deshalb die Aufgabe zugrunde, ein Federscharnier, insbesondere für einen Brillenbügel gemäß dem Oberbegriff des Anspruchs 1 derart weiterzubilden, bei dem die einzelnen Komponenten des Federscharniers auf einfache Weise zusammengesetzt und demontiert werden können, so daß jede einzelne Komponente separat behandelt werden kann.

Diese Aufgabe wird durch die Merkmale des Anspruchs 1 gelöst.

Erfindungsgemäß wird die Feder des Federscharniers über einen Zugstab auf das Gelenk zu bewegt. Hierzu greift der Zugstab an einem Widerlager für die Feder an, wobei der Zugstab mit dem gelenkfesten Widerlager derart zusammenwirkt, daß ab einem vorbestimmten Öffnungswinkel des Federscharniers das Widerlager unter Federspannung beispielsweise unter Kompression der Feder auf das Gelenk zu bewegt wird. Mit dieser erfindungsgemäßen Anordnung des Federscharniers wird auf einfache Weise erreicht, daß jede einzelne Komponente des Federscharniers ohne Spezialwerkzeug montiert bzw. demontiert werden und separat behandelt werden kann. Zusätzlich kann jede einzelne Komponente auch separat designermäßig ausgestaltet werden, wobei sich prinzipiell mehr Gestaltungsmöglichkeiten für die Brille ergeben. Aufgrund der einfachen und schlichten Bauweise sind die Herstellungskosten auf ein Minimum vermindert. Darüber hinaus kann aufgrund der Ausgestaltung des Federscharniers das Federscharnier nach dem Zusammenbau an der Brille galvanisiert und sandgestrahlt werden, ohne dabei die Gängigkeit des Federscharniers an sich zu beeinträchtigen. Auch werden die beim Mattieren der Brille auftretenden Probleme auf einfache Weise umgangen und das Mattieren der Brille muß nicht - wie im Stand der Technik üblich - zuvor durchgeführt werden, sondern kann erfindungsgemäß auch im zusammengebauten Zustand vorgenommen werden. Durch den erfindungsgemäßen Aufbau ist insbesondere gewährleistet, daß eine hohe Variabilität, beispielsweise hinsichtlich der einzubauenden Federn, hinsichtlich der Farbgestaltung und hinsichtlich des Gesamteindrucks zur Verfügung gestellt wird.

Dadurch, daß das erfindungsgemäße Federscharnier mit zwei Widerlager arbeitet - einem Beweglichen auf dem Bügel und einem Gelenkfesten an der Brillenfassung - entfallen die ansonsten notwendigen Anschlagflächen zwischen Brillenbügel und Bügelteil mit Gelenk bzw. Brillenfassung. Ferner kann über den Abstand zwischen Gelenk und dem gelenkfesten Widerlager eine Art Hebelwirkung erzielt werden, über die die Funktionswirkung des Federscharniers einstellbar ist.

Insbesondere dann, wenn das gelenkfeste Widerlager gemäß Anspruch 2 in Form einer Kuhle ausgebildet ist, in die der Zugstabkopf eingreift, wird auf einfache Weise ein Widerlager bereitgestellt, das mit geringem technischem Aufwand hergestellt wird. Die gestalterischen Möglichkeiten der Brille können dahingehend erweitert werden, daß beispielsweise die Oberfläche des Zugstabkopfes unterschiedlich gestaltet werden kann oder bei besonders hochwertigen Brillen mit einem Brillanten versehen werden kann. Je nach Ausgestaltung des Zugstabes bzw. der Materialbeschaffenheit des Zugstabes kann seitlich des Gelenks entlang eines Schenkels des Öffnungswinkels ein Durchgriff vorgesehen werden, in dem der Zugstab beim Öffnen entlanggleitet und der in der Kuhle mündet. Mit diesem im wesentlichen horizontal verlaufenden Durchgriff ist gewährleistet, daß insbesondere bei starr ausgebildeten Zugstäben die Biegebeanspruchung gemindert bzw. ganz vermieden wird.

Werden gemäß Anspruch 3 das Widerlager beispielweise in Form eines auf dem Bügel gleitfähigen Ringes und die Feder auf den Brillenbügel aufgefädelt, so kann das Federscharnier auf einfache Weise zusammengebaut werden und von jedermann im Bedarfsfall auseinander- und zusammenmontiert werden. Die Feder kann je nach Tragekomfort beziehungsweise Federwirkung leicht ausgetauscht werden.

Greift beispielsweise das Widerlager des Zugstabes auf der dem Gelenk zugewandten Seite der Feder an, so kann gemäß Anspruch 4 die Feder auf einfache Weise als Spiralfeder ausgelegt werden. Greift hingegen das Widerlager des Zugstabes auf der dem Gelenk abgewandten Ende der Feder an, so kann die Federwirkung auf einfache Weise gemäß Anspruch 5 durch eine Druckfeder realisiert werden.

Darüber hinaus ist es auch denkbar, daß gemäß Anspruch 6 die Feder aus einem elastischen Kunststoffteil gebildet ist, das vorzugsweise in Form eines Elastomer-Rohres vorliegt.

Der Aufbau des erfindungsgemäßen Federscharniers läßt ferner auch eine Schnappwirkung für den Brillenbügel zu, in dem gemäß Anspruch 7 die Feder gegen ein Anschlagelement gedrückt wird, welches über eine Nockenführung mit dem Gelenk verbunden ist.

Nachfolgend werden anhand schematischer Zeichnungen Ausführungsbeispiele der Erfändung näher erläutert. Es zeigen:
Fig. 1 eine Draufsicht eines in einer Brille montierten Federscharniers im aufgeklappten Zustand;
Fig. 2 eine weiter Ausführungsform des Federscharniers, wobei der Brillenbügel sowohl im aufgeklappten als auch im eingeklappten Zustand gezeigt ist;
Fig. 3 eine Vorderansicht des Vebindungssteges zwischen Brillenfassung und Brillengelenk; und
Fig. 4 eine Draufsicht eines Ohrenbügels mit bekanntem Federscharnier;

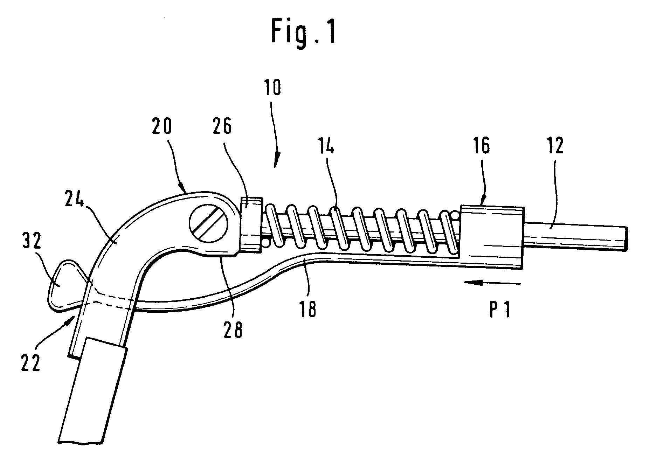

In Fig.1 ist mit dem Bezugszeichen 10 eine Federscharnieranordnung bezeichnet, die am Brillenbügel 12 montiert ist. Das Federscharnier 10 weist eine Feder, die vorzugsweise auf den Brillenbügel 12 aufgefädelt ist, ein Widerlager 16, an dem ein Zugstab 18 angreift, ein Gelenk bzw. Scharnier 20 und ein für den Zugstab 18 vorgesehenes gelenkfestes Widerlager 22 auf. Das Widerlager 22 ist vorzugsweise in dem Verbindungssteg 24 angeordnet, der die Brillenfassung mit dem Gelenk 20 verbindet. Um eine Schnappwirkung beim Öffnen bzw. beim Schließen für den Ohrenbügel bereitzustellen, kann beispielsweise ein weiteres Anschlagelement 26 an dem dem Widerlager 16 entgegengesetzten Ende der Feder 14 vorgesehen sein, das beim Öffnen bzw. beim Schließen über ein Nocke 28 geführt wird, wodurch die Feder um den Nockenhub gespannt wird.

Im aufgeklappten Zustand des Ohrenbügels 12 hat sich das Widerlager 16 unter Zusammenwirkung mit dem daran angreifenden Zugstab 18 und dem gelenkfesten Widerlager 22 unter Kompression der Feder 14 auf das Gelenk 20 (siehe Pfeil P1) zubewegt. Um die Beweglichkeit des Widerlagers im entspannten Zustand, d.h. im eingeklappten Zustand des Bügels 12, einzuschränken ist es einerseits denkbar, das Lang-Cellende, welches auf den Brillenbügel 12 aufgezogen wird, heranzuziehen, oder andererseits, den Bügel 12 mit einem Gewinde zu versehen, auf den eine Schraube aufgedreht wird, um die beispielsweise Longitudinalbewegung des Widerlagers festzulegen.

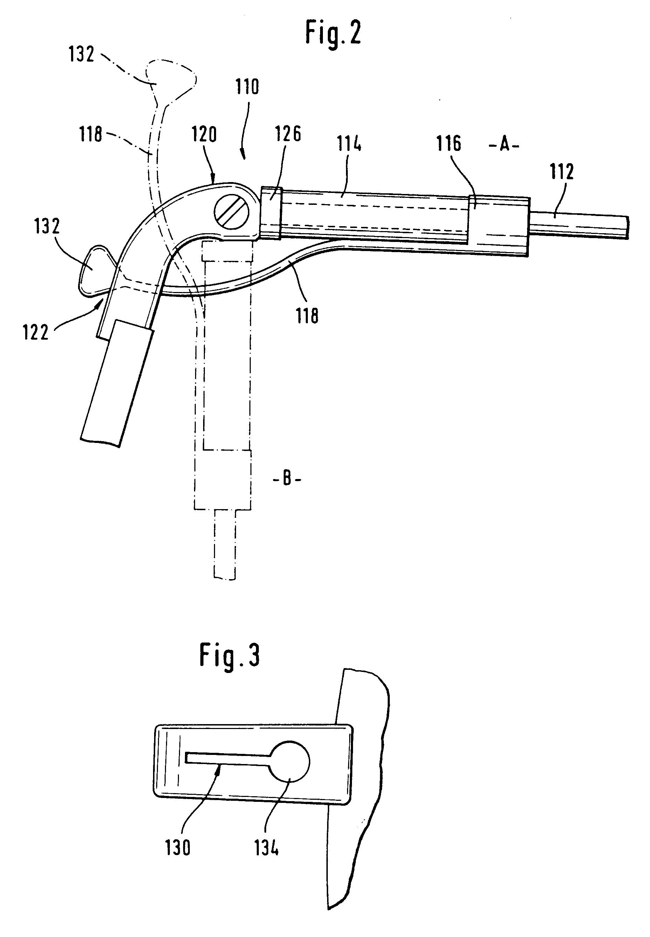

In Figur 2 ist ein weiteres Ausführungsbeispiel des erfindungsgemäßen Federscharniers gemäß Figur 1 dargestellt, bei dem anstelle der Feder ein elastisches Kunststoffteil beispielsweise in Form eines Elastomer-Rohres 114 eingesetzt ist. Ferner ist in Figur 2 der Ohrenbügel im aufgeklappten Zustand A bzw. im eingeklappten Zustand B dargestellt. Die Komponenten des Ausführungsbeispiels gemäß Figur 2 entsprechen den Komponenten der Figur 1, wobei lediglich eine 1 im Ausführungsbeispiel gemäß Figur 2 vorangestellt wurde.

Wie aus dieser Darstellung klar zu erkennen ist, steht der Zugstab 118 im eingeklappten Zustand B seitlich der Brille vor und vollzieht während des Öffnens des Ohrenbügels 112 eine seitliche Bewegung, die durch den Durchgriff 30 (siehe Figur 3) ermöglicht wird, wobei der Zugstabkopf 32 in die dafür vorgesehene Kuhle 134 hineingeschwenkt wird. Die Ausgestaltung der Kuhle 134 ist auf den Zugstabkopf abgestimmt, so daß der Zugstabkopf 132 und die Kuhle 134 das gelenkfeste Widerlager 122 bilden.

Mit dem erfindungsgemäßen Aufbau des Federscharniers ist es nunmehr möglich, unterschiedliche Inklinationswinkel einzustellen, ohne dabei die Gelenksanordnung nachträglich bearbeiten zu müssen.

Die Anordnung der Feder auf dem Bügel ist nicht darauf beschränkt, lediglich vor dem Gelenk festgelegt zu werden. Ferner kann auch die Feder, vorzugsweise Druckfeder, mit einem Rohr oder dergleichen verkleidet werden, wobei das Rohr ebenfalls unterschiedlich ausgestaltet sein kann.

Selbstverständlich sind Abwandlungen des Federscharniers möglich, ohne den Grundgedanken der Erfindung zu verlassen. So kann insbesonder der Zugstab aus einer im wesentlichen vertikal ausgerichteten Blattfeder gebildet sein.

## Patentansprüche

1. Federscharnier, insbesondere für einen Brillenbügel, bestehend aus einer zwischen einem Widerlager und einem Gelenk angeordneten Feder *gekennzeichnet durch* einen Zugstab (18; 118), der an dem Widerlager (16; 116) für die Feder (14; 114) angreift und mit seinem Zugstabkopf (32; 132) mit einem gelenkfesten Widerlager (22; 122) derart zusammenwirkt, daß es ab einem vorbestimmten Öffnungswinkel des Federscharniers das Widerlager (16; 116) unter Federspannung auf das Gelenk (20; 120) zu bewegt.

2. Federscharnier nach Anspruch 1, *dadurch gekennzeichnet, daß* das gelenkfeste Widerlager (22; 122) durch eine Kuhle (34; 134) gebildet ist, in die der Zugstabkopf (32; 132), vorzugsweise in Form einer Kugel, eingreift, und der Zugstab (18; 118) beim Öffnen in einem Durchgriff (30; 130) seitlich des Gelenks (20; 120) entlang eines Schenkels des Öffnungswinkels bewegt wird.

3. Federscharnier nach Anspruch 1 oder 2, *dadurch gekennzeichnet, daß* das Widerlager (16; 116) und die Feder (14; 114) auf dem Brillenbügel (12; 112) aufgefädelt ist.

4. Federscharnier nach einem der Ansprüche 1 bis 3, *dadurch gekennzeichnet, daß* die Feder (14) eine Spiralfeder ist.

5. Federscharnier nach einem der Ansprüche 1 bis 3, *dadurch gekennzeichnet, daß* die Feder (14) eine Druckfeder ist.

6. Federscharnier nach einem der Ansprüche 1 bis 3, *dadurch gekennzeichnet, daß* die Feder (114) aus einem elastischen Kunststoffteil, vorzugsweise in Form eines Elastomer-Rohres, gebildet ist.

7. Federscharnier nach einem der Ansprüche 1 bis 6, *dadurch gekennzeichnet, daß* die Feder gegen ein Anschlagelement (26; 126) gedrückt wird, welches über eine Nockenführung (28; 128) mit dem Gelenk (20; 120) verbunden ist, um eine Schnappwirkung zu erzielen.
